# EUROPEAN PATENT APPLICATION

(11) **EP 2 192 568 A1**
(43) Date of publication of application: **02.06.2010**
(21) Application number: 07807262.6
(22) Date of filing: 13.09.2007
(51) Int. Cl.: G09B 29/00, G06T 11/60

(54) **MAP DRAWING DEVICE**

(71) Applicant: Mitsubishi Electric Corporation, Chiyoda-ku Tokyo 100-8310 (JP)
(72) Inventor: TANAKA, Shoji, Tokyo 100-8310 (JP)
(74) Representative: Pfenning, Meinig & Partner GbR
(86) International application number: PCT/JP2007/067855
(87) International publication number: WO 2009/034634

(57) **Abstract**

A map drawing device includes a drawing parameter DB 7 for storing drawing parameter data which define specifications of map drawing, a drawing parameter managing unit 1 for managing the descriptions of the drawing parameter data, a map drawing unit 9 for carrying out map drawing according to the descriptions of the drawing parameter data managed by the drawing parameter managing unit 1, and a map drawing control unit 8 for controlling the map drawing carried out by the map drawing unit 9 according to the descriptions of the drawing parameter data managed by the drawing parameter managing unit 1.

## Description

### Field of the Invention

The present invention relates to a map drawing device that draws a map.

### Background of the Invention

In a conventional map drawing device, drawing parameters, such as information about a drawing procedure for drawing a map and whether or not each item to be drawn can be displayed according to drawing conditions, a drawing parameter specific to each item to be drawn, and parameters of a graphic system, are held fixedly in a drawing processing program (for example, refer to patent reference 1).

[Patent reference 1] JP,2003-263645,A

Conventionally, drawing parameters are held fixedly in a drawing processing program, as mentioned above. More specifically, drawing parameters are described directly in a drawing processing program. Therefore, after a drawing processing program is compiled and is mounted in a drawing device, the descriptions of the drawing parameters described in the drawing processing program cannot be changed. A problem is therefore that when the descriptions of the drawing parameters have to be changed according to change in the drawing specifications, a modification of replacing the drawing processing program with a drawing processing program in which drawing parameters complying with the changed drawing specifications are described has to be made.

The present invention is made in order to solve the above-mentioned problem, and it is therefore an object of the present invention to provide a map drawing device that can flexibly adapt to change in the drawing specifications thereof.

### Disclosure of the Invention

In accordance with the present invention, there is provided a map drawing device including: a drawing parameter database for storing drawing parameter data for defining specifications of map drawing; a drawing parameter managing unit for managing descriptions of the drawing parameter data read from the drawing parameter database; a map drawing unit for carrying out map drawing according to the descriptions of the drawing parameter data managed by the drawing parameter managing unit; and a map drawing control unit for controlling the map drawing carried out by the map drawing unit according to the descriptions of the drawing parameter data managed by the drawing parameter managing unit. Therefore, the map drawing device in accordance with the present invention has an advantage of being able to flexibly adapt to any change in the drawing specifications.

### Brief Description of the Figures

[Fig. 1] Fig. 1 is a block diagram showing the structure of a map drawing device in accordance with Embodiment 1 of the present invention;
[Fig. 2] Fig. 2 is a view showing an example of a drawing layer structure;
[Fig. 3] Fig. 3 is a flow chart showing a flow of a drawing parameter initialization process carried out by the map drawing device show in Fig. 1;
[Fig. 4] Fig. 4 is a view showing the data structure of data managed by a display determination managing unit shown in Fig. 1;
[Fig. 5] Fig. 5 is a view showing the data structure of data managed by a drawing order managing unit shown in Fig. 1;
[Fig. 6] Fig. 6 is a flow chart showing a flow of a map drawing process carried out by the map drawing device shown in Fig. 1; and
[Fig. 7] Fig. 7 is a view showing an example of a setting of a drawing command.

### Preferred Embodiments of the Invention

Hereafter, in order to explain this invention in greater detail, the preferred embodiments of the present invention will be described with reference to the accompanying drawings.

### Embodiment 1.

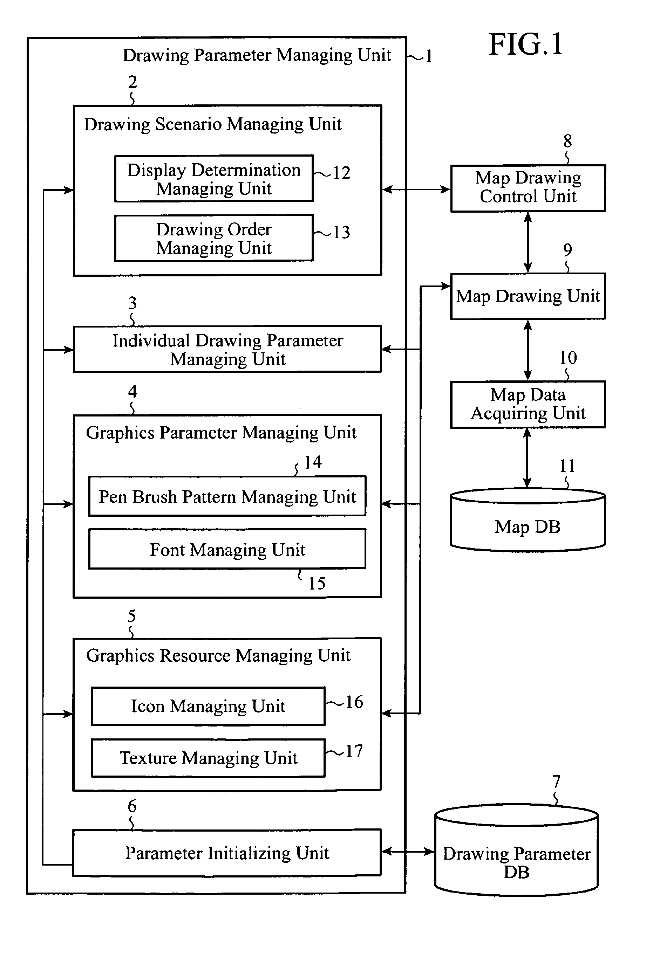

Fig. 1 is a block diagram showing the structure of a map drawing device in accordance with Embodiment 1 of the present invention. In Fig. 1, the drawing parameter managing unit 1 includes a drawing scenario managing unit 2, an individual drawing parameter managing unit 3, a graphics parameter managing unit 4, a graphics resource managing unit 5 and a parameter initializing unit 6, and manages drawing parameters used for map drawing. The above-mentioned drawing parameters define the drawing specifications of the map drawing device in accordance with Embodiment 1, and are roughly divided into the following four types of drawing parameters: a drawing scenario parameter, an individual drawing parameter, a graphics parameter, and a graphics resource parameter.

In this Embodiment 1, a case in which the drawing parameters are written in XML (eXtensible Markup Language) will be mentioned as an example. The drawing parameters in accordance with the present invention can be alternatively described as binary data or can be alternatively described in a specific format as long as the drawing parameters have only to be described in a data format which can be read and written by the drawing parameter managing unit 1, the map drawing control unit 8, and the map drawing unit 9.

The drawing scenario managing unit 2 has a display determination managing unit 12 and a drawing order managing unit 13, and manages the data descriptions of the above-mentioned drawing scenario parameter. Data for controlling whether each of items to be drawn can be displayed according to both drawing conditions and a drawing order are set to the drawing scenario parameter. Icons and so on, as well as elements displayed on a map, are included in the items to be drawn.

The display determination managing unit 12 manages data, which is included in the data set to the above-mentioned drawing scenario parameter, for controlling whether each of items to be drawn can be displayed according to the drawing conditions. The drawing conditions include, for example, a map display mode (a north reference display mode, a vehicle direction display mode, or the like), a display screen scroll speed, a season, a time, and so on. An example of the descriptions of the drawing scenario parameter data which defines such the drawing conditions is shown below.

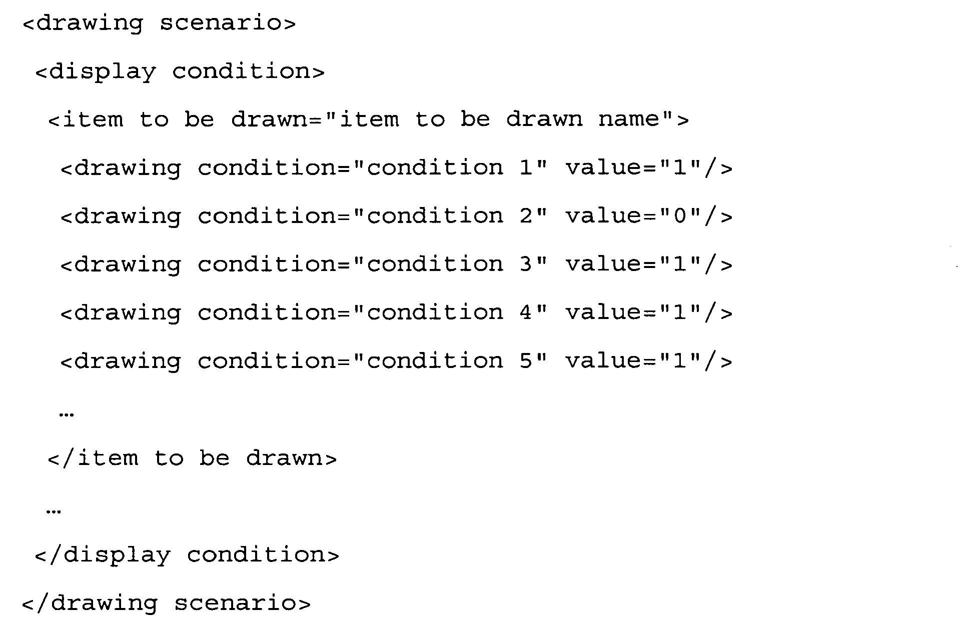

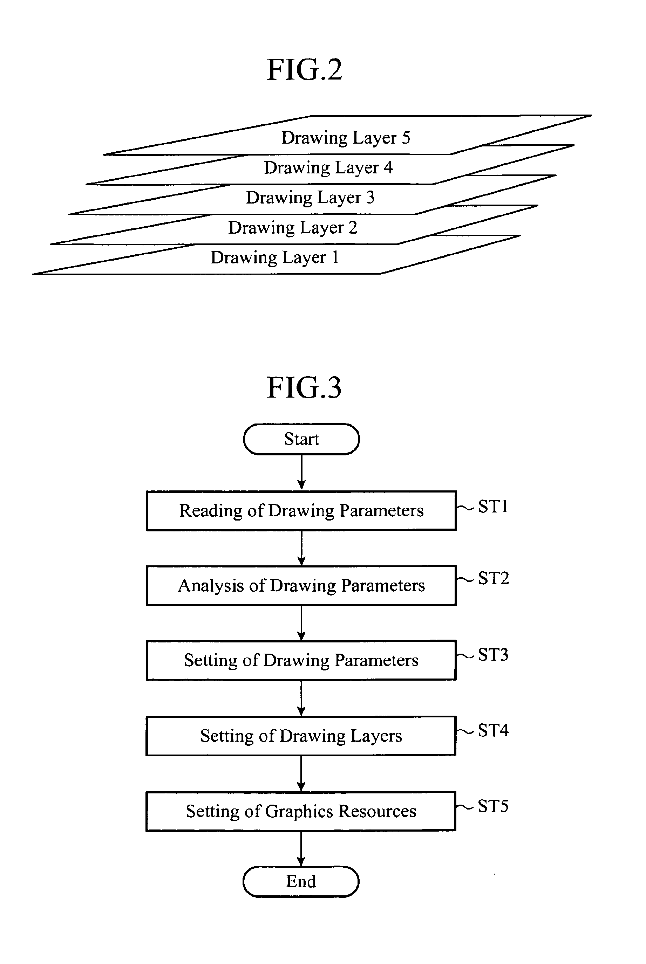

The drawing order managing unit 13 manages data, which is included in the data set to the above-mentioned drawing scenario parameter, for controlling whether each of the items to be drawn can be displayed according to the drawing order. As shown in Fig. 2, a case in which drawing is performed for each of a plurality of drawing layers by a graphics system will be mentioned as an example. In this case, specification of a layer in which each of the items to be drawn is to be drawn is equivalent to the specification of whether or not each of the items to be drawn can be drawn according to the drawing order. Furthermore, a drawing priority (priority) given to each of the items to be drawn in each identical drawing layer can also be set to the above-mentioned drawing scenario parameter. Hereafter, an example of the descriptions of the drawing scenario parameter data which defines the drawing order of the items to be drawn will be shown.

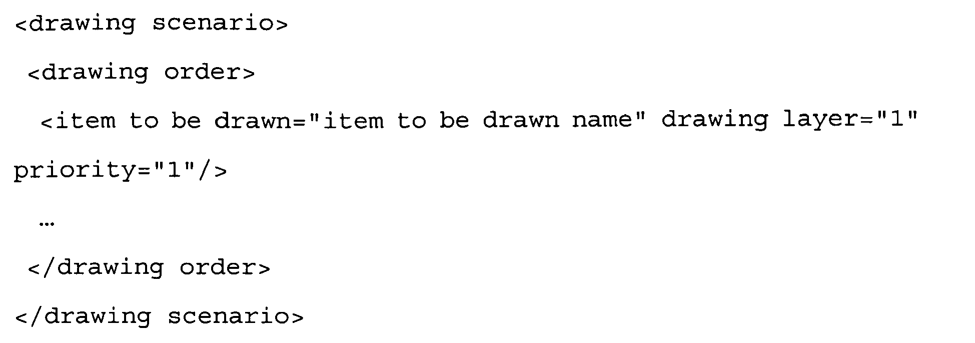

The individual drawing parameter managing unit 3 manages the data descriptions set to the above-mentioned individual drawing parameter. Data which defines a drawing process specific to each of the items to be drawn is set to the above-mentioned individual drawing parameter. In a case in which, for example, a road line is drawn as an item to be drawn, a line thickness provided for each map scale, a color, a value of a flag showing whether or not a border is to be drawn, and so on are set to the individual drawing parameter of the item to be drawn. Furthermore, in a case in which a map icon is drawn as an item to be drawn, a scale according to the position of the map icon, a font and a color of characters, and so on are set to the individual drawing parameter of the item to be drawn. In the data set to the above-mentioned individual drawing parameter, different descriptions are described for each of the items to be drawn (map items). Although data about a pen and a brush which are used at the time of drawing each of the items to be drawn can be described in the above-mentioned individual drawing parameter, the data descriptions about such a pen and a brush are managed by a pen brush pattern managing unit 14 which will be mentioned below. Hereafter, an example of the descriptions of the individual drawing parameter data in a case of drawing a road line as an item to be drawn will be shown.

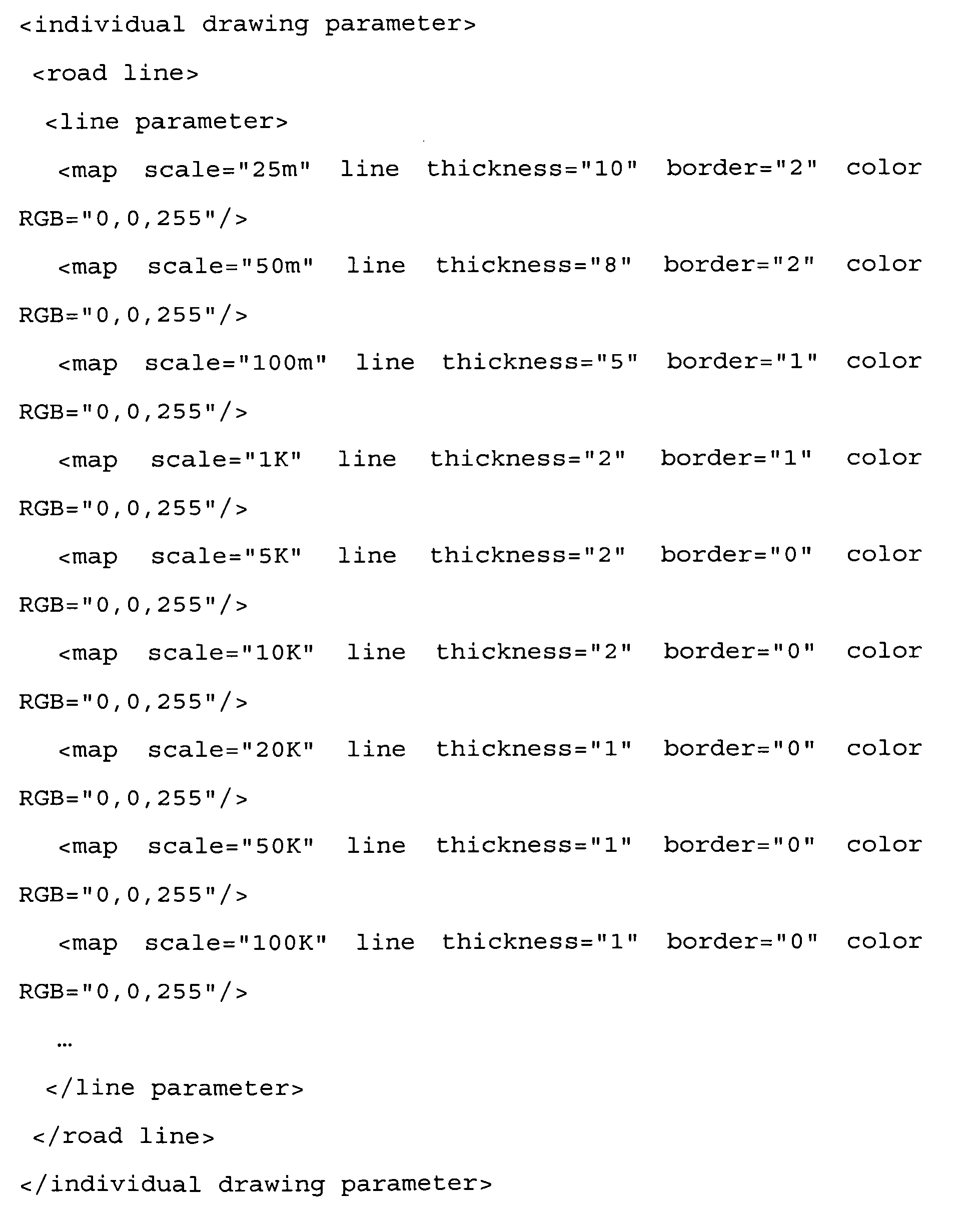

The graphics parameter managing unit 4 has a pen brush pattern managing unit 14 and a font managing unit 15, and manages the data descriptions of the above-mentioned graphics parameter. Data about graphics tools and a character font which are used for the map drawing are described in the graphics parameter.
The graphics parameter data include, for example, data about graphics tools, such as a pen and a brush, which are constantly registered in the graphics system, and data about a character font (a system font) and so on which are handled by the graphics system.

The graphics system is a component of the map drawing unit 9, and performs a drawing process according to the data descriptions of the graphics parameter. Furthermore, the graphics system is configured of both hardware for drawing 2D or 3D graphics which is included in a computer which functions as the map drawing device in accordance with the present invention, and a software library which is included in software performed by the computer.

The pen brush pattern managing unit 14 manages the descriptions of data about a pen, a brush and a pattern, which is included in the data set to the graphics parameter. The data about a pen, a brush and a pattern specifies graphics tools (a pen and a brush) used in the drawing process carried out by the graphics system, and the drawing specifications of the graphics tools. For example, on the basis of the data about a pen, a brush and a pattern, the types of a pen and a brush used, the thickness of a line drawn with the pen, and a color and a pattern with which a rectangular region is filled in are set. Furthermore, the font managing unit 15 manages the descriptions of data about a font, which is included in the data set to the above-mentioned graphics parameter. In the data about a font, a font (a system font) required for character drawing by the graphics system and font replacement information are described. Hereafter, an example of the descriptions of the graphics parameter data will be shown.

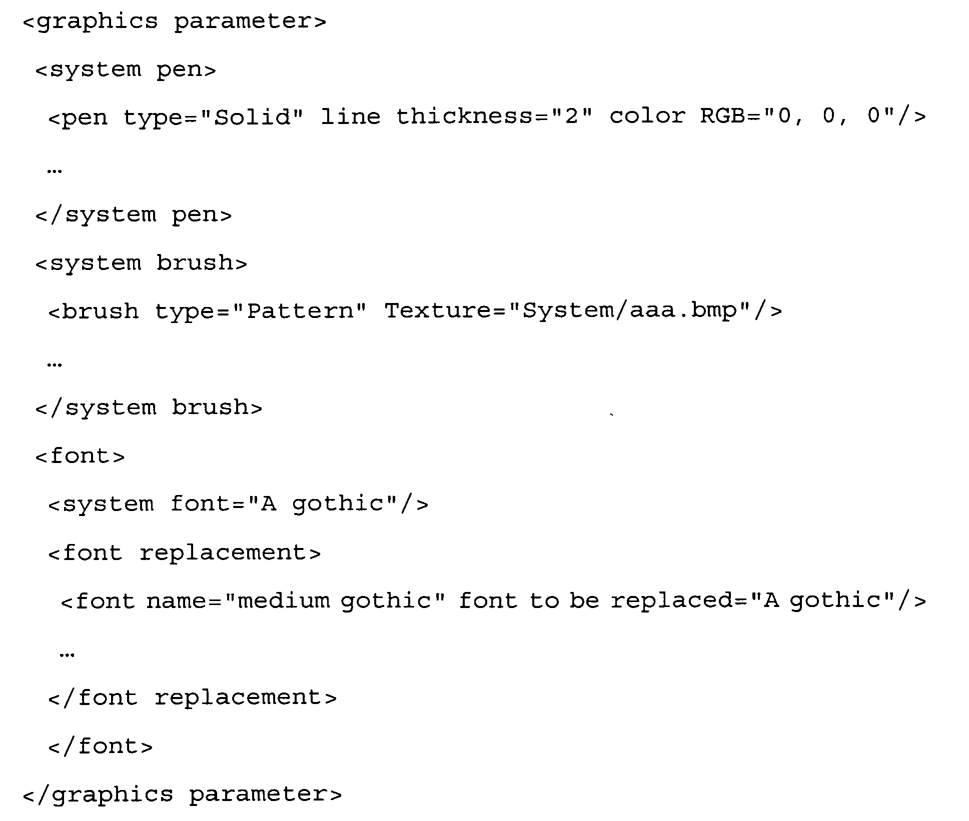

The graphics resource managing unit 5 is provided with an icon managing unit 16 and a texture managing unit 17, and manages the data descriptions of the graphics resource parameter. In this graphics resource parameter, data which defines graphics resources used in the map drawing is described. The graphics resources include, for example, icons which are displayed in the drawing results and texture images which are used at a time of 3D map drawing.

The icon managing unit 16 manages the descriptions of data about the icons, which is included in the graphics resource parameter. The texture managing unit 17 manages the descriptions of data about the texture images, which is included in the graphics resource parameter. Hereafter, an example of the descriptions of the graphics resource data will be shown.

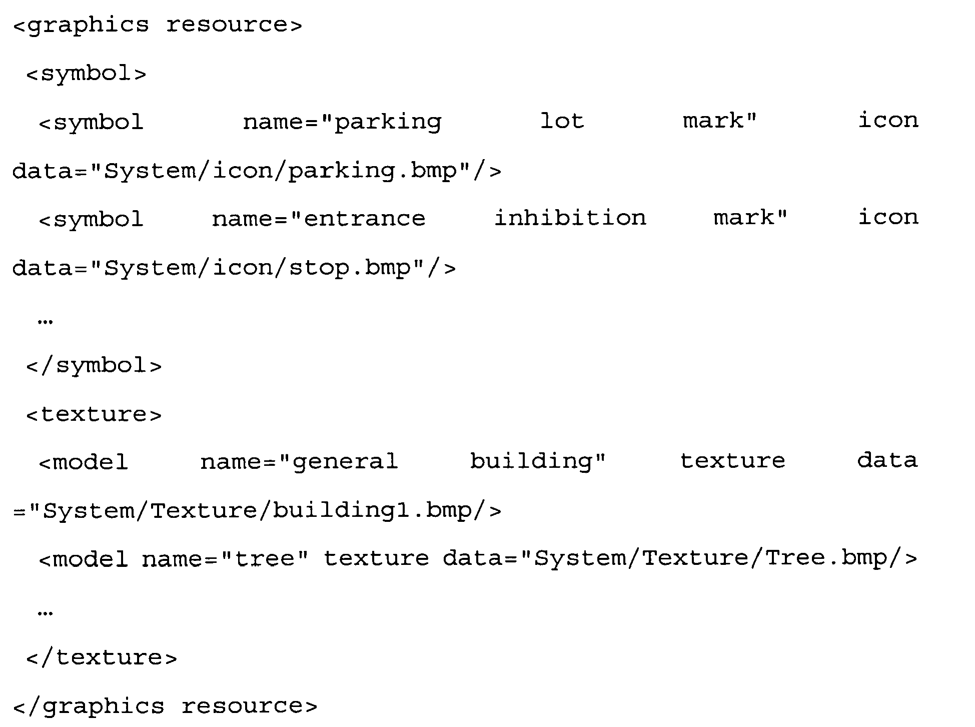

In an initialization process of initializing the drawing parameter data managed by the drawing parameter managing unit 1, the parameter initializing unit 6 reads the drawing parameter data from the drawing parameter database 7, and sets the initial values of the corresponding drawing parameter data to each of the managing units which configure the drawing parameter managing unit 1. The drawing parameter database (referred to as the drawing parameter DB from here on) 7 is the one in which the drawing parameter data managed by the drawing parameter managing unit 1 are described. In this case, the drawing parameter data are described in a data form as shown in the above-mentioned example of descriptions in the drawing parameter DB 7.

The map drawing control unit 8 controls the map drawing process carried out by the map drawing unit 9 on the basis of the drawing scenario parameter data inputted thereto from the drawing scenario managing unit 2 of the drawing parameter managing unit 1. Under control of the map drawing control unit 8 on the basis of the drawing scenario parameter data, the map drawing unit 9 performs the map drawing using map data according to the drawing parameter data set up by the individual drawing parameter managing unit 3, the graphics parameter managing unit 4 and the graphics resource managing unit 5.

The map data acquiring unit 10 reads map data from the map database 11 according to a request from the map drawing unit 9, and sets the map data to the map drawing unit 9. The map database (referred to as the map DB from here on) 11 is the one in which the above-mentioned map data are described. The map data show a map of a predetermined area, and objects on the map.

By loading a drawing processing program in accordance with the scope of the present invention into a computer, and then controlling the operation of the drawing processing program, the above-mentioned drawing parameter managing unit 1, the above-mentioned map drawing control unit 8, the above-mentioned map drawing unit 9 and the above-mentioned map data acquiring unit 10 can be implemented as a concrete means in which software and hardware run on the computer in cooperation with each other. Furthermore, the drawing parameter DB 7 and the map DB 11 are configured in a storage unit from and into which each of the drawing parameter managing unit 1 and the map data acquiring unit 10 can read and write data.

Next, the operation of the map drawing device will be explained.
Fig. 3 is a flow chart showing a flow of the drawing parameter initialization process carried out by the map drawing device shown in Fig. 1, and the details of the process will be explained with reference to this chart and Fig. 1.
The parameter initializing unit 6 of the drawing parameter managing unit 1 reads the drawing parameter data from the drawing parameter DB 7 (step ST1), and analyzes the drawing parameter data acquired thereby (step ST2). For example, the parameter initializing unit analyzes the tag contents (the contents described within <>) of the drawing parameter data written in XML to determine the types of the drawing parameters.

The parameter initializing unit 6 then sets the drawing parameter data to the drawing scenario managing unit 2, the individual drawing parameter managing unit 3, the graphics parameter managing unit 4, and the graphics resource managing unit 5 according to the types of the drawing parameter data (step ST3).

After the drawing scenario parameter data are set to the drawing scenario managing unit 2 by the parameter initializing unit 6, the drawing scenario managing unit 2 outputs the data about a drawing layer setting (a setting of the drawing order), which is included in this drawing scenario parameter data, to the map drawing control unit 8. The map drawing control unit 8 sets information about drawing layers for each of which map drawing is to be performed to the map drawing unit 9 on the basis of the descriptions of the inputted data about a drawing layer setting (step ST4).

The graphics resource managing unit 5 also sets the data descriptions of the graphics resource parameter inputted thereto from the parameter initializing unit 6 to the map drawing unit 9 (step ST5). As a result, the map drawing unit 9 registers the graphics resources specified by the graphics resource parameter data into the graphics system.

Hereafter, the details of drawing parameter management carried out by each of the managing units 2 to 5 of the drawing parameter managing unit 1 will be explained.

### (1) Drawing parameter management carried out by the display determination managing unit 12

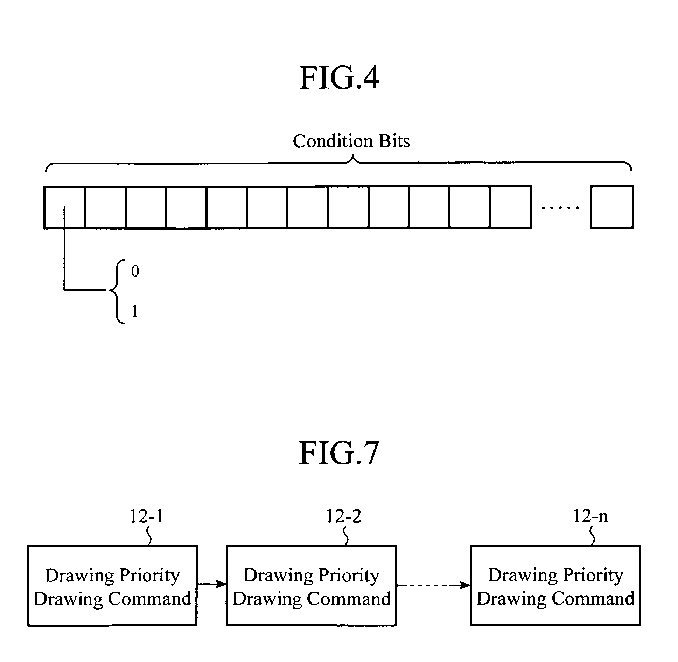

Fig. 4 is a view showing the data structure of data managed by the display determination managing unit shown in Fig. 1. Condition bits shown in Fig. 4 are digital data which defines the drawing conditions, and one bit of these condition bits is defined as a bit showing whether or not an item to be drawn can be displayed. Thus, in the data managed by the display determination managing unit 12, a bit showing whether or not an item to be drawn can be displayed is assigned to each of the drawing conditions which are assumed in advance. In case in which the item to be drawn is displayed, a digital value of 1 is set to this bit, whereas in case in which the item to be drawn is not displayed, a digital value of 0 is set to the bit.
Furthermore, the drawing condition data including bits each showing whether or not an item to be drawn can be displayed are expressed as, for example, a 32-bit integer type array, and the bits each for determination of whether or not an item to be drawn can be displayed are set to all the items to be drawn respectively. When the map drawing unit 9 carries out the map drawing process, the display determination managing unit 12 receives an inquiry about whether or not each of the items to be drawn can be displayed from the map drawing unit 9 via the map drawing control unit 8, and, in response to this inquiry, determines whether or not each of the items to be drawn can be displayed on the basis of the drawing scenario parameter data which the display determination managing unit itself manages.

### (2) Drawing parameter management carried out by the drawing order managing unit 13

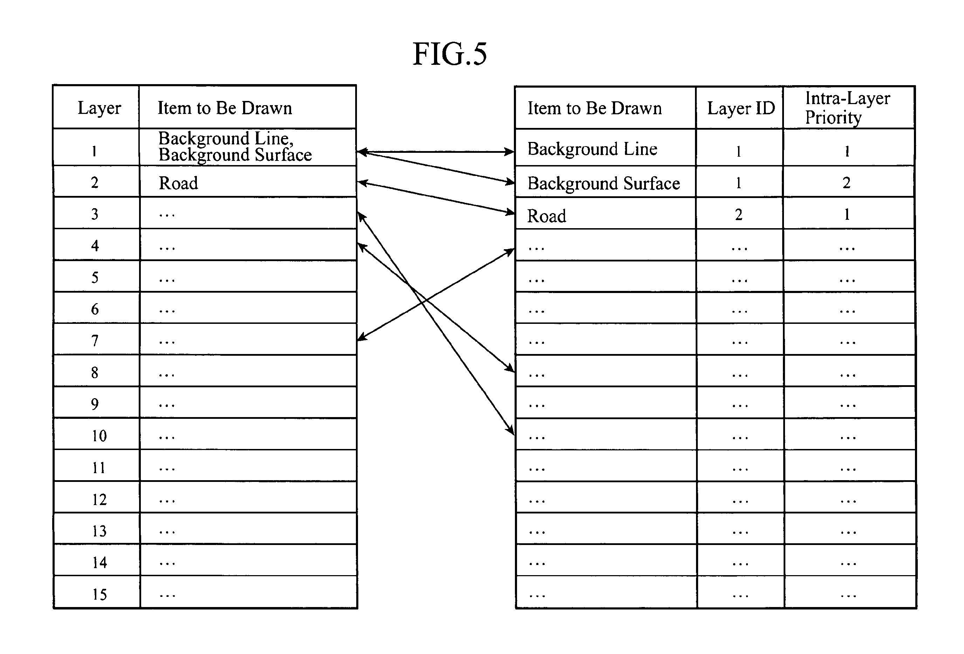

By using the data about the drawing order, which is included in the drawing scenario parameter data, the drawing order managing unit 13 generates management data for controlling whether or not each of the items to be drawn can be displayed according to the drawing order. Fig. 5 is a view showing the data structure of the data managed by the drawing order managing unit shown in Fig. 1. As shown in Fig. 5, the drawing order managing unit 13 generates table data in which items to be drawn which are to be assigned to each drawing layer are registered according to the data about the drawing order (refer to a left-hand side of the view shown in Fig. 5).
The drawing order managing unit 13 then generates table data in which a layer ID for identifying an assigned drawing layer and an intra-layer priority showing a drawing priority within the drawing layer are brought into correspondence with each of the items to be drawn (refer to a right-hand side of the view shown in Fig. 5). The drawing order managing unit 13 manages the drawing order of the items to be drawn with reference to this table data. The drawing order managing unit 13 also sets the data descriptions of the above-mentioned table to the map drawing control unit 8. The map drawing control unit 8 controls the map drawing carried out by the map drawing unit 9 according to the data descriptions of the above-mentioned table.

### (3) Drawing parameter management carried out by the individual drawing parameter managing unit 3

When the individual drawing parameter data about each of the items to be drawn is set to the individual drawing parameter managing unit 3 from the parameter initializing unit 6, the individual drawing parameter managing unit 3 generates management data in which an individual drawing parameter is brought into correspondence with each of the items to be drawn. As this management data, for example, table data in which each of the items to be drawn is brought into correspondence with its individual drawing parameter can be considered.

### (4) Drawing parameter management carried out by the graphics parameter managing unit 4

The pen brush pattern managing unit 14 of the graphics parameter managing unit 4 extracts the data about a pen, a brush and a pattern from the graphics parameter data inputted thereto from the parameter initializing unit 6. The pen brush pattern managing unit 14 then registers the data about a pen, a brush and a pattern into the graphics system, and also manages the ID of this data.
Furthermore, the font managing unit 15 extracts the data about a system font from the above-mentioned graphics parameter data. After that, the font managing unit 15 registers the data about a system font into the graphics system, and manages the ID of this data.

### (5) Drawing parameter management carried out by the graphics resource managing unit 5

The icon managing unit 16 of the graphics resource managing unit 5 extracts the data about icons from the graphics resource parameter data inputted thereto from the parameter initializing unit 6, and registers the data into the graphics system. After that, the icon managing unit 16 manages the data as array data in which an icon ID for identifying each icon registered into the graphics system is brought into correspondence with the item-to-be-drawn ID of an item to be drawn corresponding to this icon.
Furthermore, the texture managing unit 17 extracts the data about texture images from the above-mentioned graphics resource parameter data, and registers the data into the graphics system. After that, the texture managing unit 17 manages the data as array data in which a texture ID for identifying each texture image registered into the graphics system is brought into correspondence with the item-to-be-drawn ID of an item to be drawn corresponding to this texture image.

Next, the map drawing process will be explained.

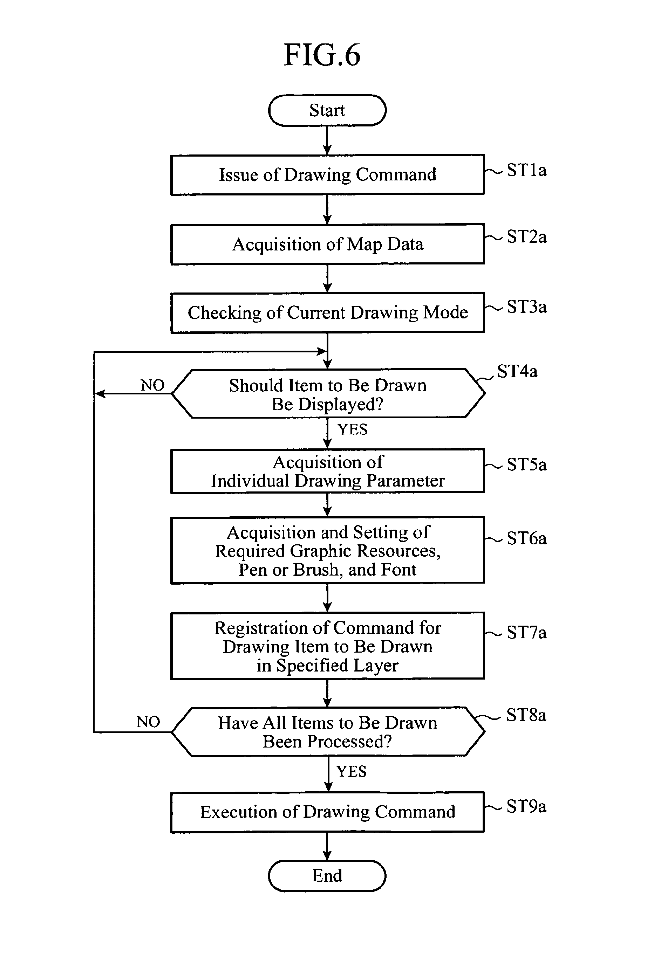

Fig. 6 is a flow chart showing a flow of the map drawing process carried out by the map drawing device shown in Fig. 1, and the details of the process will be explained with reference to this chart and Fig. 1.
The map drawing control unit 8 commands the map drawing unit 9 to carry out the drawing process according to the data descriptions of the drawing scenario parameter set thereto from the drawing scenario managing unit 2 (step ST1a). At this time, the map drawing control unit 8 sets a map graphic scale, a map display mode (a north reference display mode, a vehicle direction display mode, or the like), etc. to the map drawing unit 9. The map drawing control unit 8 can alternatively set information about a map graphic scale, a map display mode, etc. to the map drawing unit 9 according to a user command which is inputted to the map drawing device via an input unit.

Furthermore, the map drawing unit 9 makes a request of the map data acquiring unit 10 for map data about a map of an area required for the map drawing. The map data acquiring unit 10 reads map data according to this request from the map DB 11 and outputs the map data to the map drawing unit 9. As a result, the map drawing unit 9 acquires the map data about the map of the area required for the map drawing (step ST2a).

After acquiring the map data, the map drawing unit 9 inquires of the map drawing control unit 8 about the current drawing mode (the drawing conditions) to check the current drawing mode (step ST3a). Next, the map drawing control unit 8 inquires of the display determination managing unit 12 whether the map drawing control unit should display an item to be drawn in the current drawing mode. The display determination managing unit 12 determines whether the map drawing control unit should display the item to be drawn which is the target for the determination in response to this inquiry (step ST4a). As a criterion for the determination, for example, the determination bits as shown in Fig. 4 can be considered.

When the display determination managing unit 12 determines that it does not display the item to be drawn which is the target for the determination in the current drawing mode, the display determination managing unit 12 returns to the process of step ST4a and makes a transition to a waiting state in which the display determination managing unit is waiting for an inquiry about an item to be drawn which is the next target for the determination.
In contrast, when the determination result shows that the item to be drawn which is the target for the determination is displayed, the display determination managing unit 12 notifies the ID of the item to be drawn which is the target for the determination to the individual drawing parameter managing unit 3. The individual drawing parameter managing unit 3 sets the individual drawing parameter data corresponding to the item-to-be-drawn ID notified thereto from the display determination managing unit 12 to the map drawing unit 9. As a result, the map drawing unit 9 acquires the individual drawing parameter data corresponding to the item to be drawn which is the target for the determination (step ST5a).

At this time, when determining that the item to be drawn which is the target for the determination is an icon from the data descriptions of the individual drawing parameter of the item to be drawn, the individual drawing parameter managing unit 3 notifies the ID of the item to be drawn to the graphics resource managing unit 5. The icon managing unit 16 of the graphics resource managing unit 5 searches for the icon ID corresponding to the ID of the item to be drawn notified thereto from the individual drawing parameter managing unit 3, and sets the icon ID which is the search result to the map drawing unit 9.
Also when determining that the item to be drawn which is the target for the determination is a texture image from the data descriptions of the individual drawing parameter of the item to be drawn, the individual drawing parameter managing unit 3 notifies the ID of the item to be drawn to the graphics resource managing unit 5. The icon managing unit 16 of the graphics resource managing unit 5 searches for the texture ID corresponding to the ID of the item to be drawn notified thereto from the individual drawing parameter managing unit 3, and sets the texture ID which is the search result to the map drawing unit 9.
Furthermore, when determining that an pen and a brush are specified for drawing the above-mentioned item to be drawn which is the target for the determination from the data descriptions of the individual drawing parameter of the item to be drawn, the individual drawing parameter managing unit 3 notifies the data about the pen and the brush to the graphics parameter managing unit 4. The pen brush pattern managing unit 14 of the graphics parameter managing unit 4 sets the pen and the brush corresponding to the data notified thereto from the individual drawing parameter managing unit 3 to the map drawing unit 9.
Furthermore, when a system font is specified by the data descriptions of the individual drawing parameter of the item to be drawn which is the target for the determination, the individual drawing parameter managing unit 3 notifies the data about the system font to the graphics parameter managing unit 4. The font managing unit 15 of the graphics parameter managing unit 4 sets the data about the font corresponding to the data notified thereto from the individual drawing parameter managing unit 3 to the map drawing unit 9. The above-mentioned process corresponds to step ST6a.

After up to the process in step ST6a is completed, the map drawing control unit 8 specifies a drawing layer in which the item to be drawn which is the target for determination is to be drawn on the basis of the data about the drawing order set thereto from the drawing order managing unit 13 (refer to Fig. 5). After that, the map drawing control unit 8 registers a drawing command for drawing the above-mentioned item to be drawn in the above-mentioned drawing layer (step ST7a).

Next, the map drawing control unit 8 determines whether it has performed the processes in steps ST4a to ST7a on all the items to be drawn used for the map drawing (step ST8a). When having not performed the processes in steps ST4a to ST7a on all the items to be drawn yet, the map drawing control unit 8 repeats the processes in steps ST4a to ST7a until it has performed the processes on all the items to be drawn. When registering drawing commands respectively corresponding to the drawing layers in this processing loop, the map drawing control unit 8 constructs a command list of commands 12-1, 12-2, ..., 12-n in which the drawing commands are arranged in a line in order of the drawing priorities of the items to be drawn as shown in Fig. 7. For example, the map drawing control unit 8 generates list data 12-1 to 12-n for respectively storing the drawing commands arranged in the order of the drawing priorities for the drawing layers by using the drawing layers, the items to be drawn and the table data about their drawing priorities as shown in Fig. 5. The map drawing control unit inserts the drawing command for drawing the item to be drawn which is the target for determination with the different types of drawing parameters set up in the above-mentioned processing loop into the list of the corresponding drawing priority of the above-mentioned list data.

When the map drawing control unit 8, in step ST8a, determines that it has performed the processes on all the items to be drawn, and have completed the registration of all the drawing commands, the map drawing control unit 8 sets the generated drawing commands (the drawing command list) to the graphics system of the map drawing unit 9. The graphics system draws a map by executing the drawing commands set up by the map drawing control unit 8 in order of them arranged in the list (step ST9a). Thus, in the map drawing device in accordance with Embodiment 1, the map drawing unit 9 can carry out the map drawing by simply executing the drawing commands arranged in the list in order of their drawing priorities. Therefore, even if a change is made to the drawing specifications, by generating a drawing command list complying with the change in the drawing specifications without newly configuring a program logic, the map drawing device in accordance with this Embodiment can control whether or not to display each of items to be drawn and the drawing order in which the items to be drawn are drawn according to the drawing mode (the drawing conditions).

As mentioned above, the map drawing device in accordance with this Embodiment 1 includes the drawing parameter DB 7 for storing drawing parameter data which define the specifications of map drawing, the drawing parameter managing unit 1 for managing the descriptions of the drawing parameter data read from the drawing parameter DB 7, the map drawing unit 9 for performing the map drawing according to the descriptions of the drawing parameter data managed by the drawing parameter managing unit 1, and the map drawing control unit 8 for controlling the map drawing performed by the map drawing unit 9 according to the descriptions of the drawing parameter data managed by the drawing parameter managing unit 1. Because the map drawing device in accordance with this Embodiment 1 is configured in this way, the map drawing device in accordance with this Embodiment 1 can perform the map drawing by simply registering drawing parameters complying with the desired drawing specifications into the drawing parameter DB 7 without providing a drawing processing program in which the drawing parameters for defining the drawing specifications are described (a drawing processing program for holding the drawing parameters fixedly). Therefore, the map drawing device in accordance with this Embodiment 1 can adapt to any change in the drawing specifications without having to carry out a modification of replacing the existing drawing processing program with a new drawing processing program, or the like. Industrial Applicability

As mentioned above, because the map drawing device in accordance with the present invention can flexibly adapt to any change in the drawing specifications, the map drawing device in accordance with the present invention is suitable for use as, for example, a map drawing device mounted in a car navigation system for which a change in the drawing specifications is assumed according to an update of maps.

## Claims

1. A map drawing device comprising:
a drawing parameter database for storing drawing parameter data for defining specifications of map drawing;
a drawing parameter managing unit for managing descriptions of the drawing parameter data read from said drawing parameter database;
a map drawing unit for carrying out map drawing according to the descriptions of the drawing parameter data managed by said drawing parameter managing unit; and
a map drawing control unit for controlling the map drawing carried out by said map drawing unit according to the descriptions of the drawing parameter data managed by said drawing parameter managing unit.

2. The map drawing device according to claim 1, **characterized in that** the drawing parameter managing unit includes:
a drawing scenario managing unit for managing descriptions of drawing scenario parameter data, which is included in the drawing parameter data, for controlling both whether or not an item to be drawn can be displayed according to drawing conditions, and whether or not an item to be drawn can be displayed according to a drawing order;
an individual drawing parameter managing unit for managing descriptions of individual drawing parameter data, which is included in the drawing parameter data, for defining a drawing process specific to each item to be drawn;
a graphics parameter managing unit for managing descriptions of graphic parameter data, which is included in the drawing parameter data, for defining a graphics tool and a character font which are used for the map drawing;
a graphics resource managing unit for managing descriptions of graphics resource parameter data, which is included in the drawing parameter data, for defining a graphics resource used for the map drawing; and
a parameter initializing unit for reading said drawing parameter data from the drawing parameter database when the map drawing device carries out a drawing process of drawing a map, and for setting corresponding drawing parameter data to each of said managing units.

3. The map drawing device according to claim 2, **characterized in that** the drawing scenario managing unit includes:
a display determination managing unit for managing descriptions of data, which is included in the drawing scenario parameter data, for controlling whether or not an item to be drawn can be displayed according to the drawing conditions; and
a drawing order managing unit for managing descriptions of data, which is included in said drawing scenario parameter data, for controlling whether or not an item to be drawn can be displayed according to the drawing order.

4. The map drawing device according to claim 2, **characterized in that** the graphics parameter managing unit includes:
a pen brush pattern managing unit for managing descriptions of data about a graphic tool used for the map drawing, which is included in the graphic parameter data; and
a font managing unit for managing descriptions of data about a font of characters to be drawn, which is included in said graphic parameter data.

5. The map drawing device according to claim 2, **characterized in that** the graphics resource managing unit includes:
an icon managing unit for managing descriptions of data about an icon which is included in the graphics resource parameter data; and
a texture managing unit for managing descriptions of data about texture data which is included in the graphics resource parameter data.

6. The map drawing device according to claim 2, **characterized in that** the map drawing control unit controls the map drawing carried out by the map drawing unit according to the descriptions of the drawing scenario parameter data managed by the drawing scenario managing unit, and said map drawing unit carries out the map drawing according to the descriptions of the parameter data managed by the individual drawing parameter managing unit, the graphics parameter managing unit, and the graphics resource managing unit.

7. The map drawing device according to claim 2, **characterized in that** the map drawing control unit generates a drawing command list including drawing commands for drawing items to be drawn which are arranged in order of drawing priorities on a basis of the drawing scenario parameter data managed by the drawing scenario managing unit, and the map drawing unit carries out the drawing by executing the drawing commands in said drawing command list one by one.
